# EUROPEAN PATENT APPLICATION

(11) **EP 2 159 969 A1**
(43) Date of publication of application: **03.03.2010**
(21) Application number: 09765339.8
(22) Date of filing: 16.01.2009
(51) Int. Cl.: H04L 12/54, H04L 29/06

(54) **SIP TERMINAL AND THE STATUS REPORTING METHOD, SYSTEM AND SIP SERVER THEREOF**

(30) Priority: 19.06.2008 CN 200810127054
(71) Applicant: Huawei Technologies Co., Ltd., Shenzhen, Guangdong 518129 (CN)
(72) Inventor: YANG, Yanfei, Shenzhen Guangdong 518129 (CN); SUN, Guilong, Shenzhen Guangdong 518129 (CN); ZHOU, Jun, Shenzhen Guangdong 518129 (CN)
(74) Representative: Thun, Clemens
(86) International application number: PCT/CN2009/070173
(87) International publication number: WO 2009/152699

(57) **Abstract**

A session initiation protocol (SIP) terminal, a method and system for reporting status thereof, and an SIP server are provided. The present invention relates to the field of communications, and is capable of enabling the SIP terminal to initiatively report status information to the SIP server, thereby ensuring a normal connection of an SIP call. The method includes: detecting whether status of the SIP terminal changes; generating status reporting information when the status of the SIP terminal changes; and sending current status of the SIP terminal to the SIP server in the form of the status reporting information. The present invention is mainly applied to the SIP technology.

## Description

The application claims the benefit of priority to Chinese Patent Application No. 200810127054.9, filed on June 19, 2008 and entitled "SIP TERMINAL, METHOD AND SYSTEM FOR REPORTING STATUS THEREOF, AND METHOD AND EQUIPMENT OF PROCESSING THE REPORTED STATUS", which is incorporated herein by reference in its entirety.

### FIELD OF THE TECHNOLOGY

The present invention relates to the field of communications, and more particularly to an SIP terminal, a method and system for reporting status thereof, and an SIP server.

### BACKGROUND

Session initiation protocol (SIP) has drawn great attention in the field of telecommunications, and more and more telecom-equipment providers propose solutions based on SIP in researching and developing the SIP technology. As a result, SIP terminals in diversified forms also emerge accordingly, such as SIP integrated access device (SIP IAD), SIP phone, SIP softphone, and SIP mobile phone.

A communication network architecture established based on SIP includes equipments such as SIP terminals and SIP servers. The SIP servers may establish session processes with other users for the SIP terminals according to the status of the SIP terminals recorded thereon.

In the conventional art, according to the specification of the SIP, an SIP user or SIP server obtains status information of an SIP terminal of a designated SIP user by subscribing to a session status of the SIP user. In the SIP, the SIP user or SIP server sends subscription to the status information of a certain SIP terminal through a Subscribe message, and after receiving the Subscribe message, the SIP terminal sends its own status information to the SIP user or SIP server through a Notify message.

In the implementation of the present invention, the inventor discovers that, in the conventional art, the current SIP only supports utilizing the Subscribe/Notify messages to subscribe to the session status of the SIP terminal, i.e., only the status information of the SIP terminal in the process from the SIP session to the end of the session is obtained by using the technical solutions of the conventional art. When the user is offhook, the SIP terminal does not initiate a call, i.e., no session is generated, so that the SIP user or SIP server still may not obtain the status information of the designated SIP terminal.

### SUMMARY

On the one hand, embodiments of the present invention provide a session initiation protocol (SIP) terminal and a method for reporting status of the SIP terminal, so that the SIP terminal is enabled to initiatively report status information to the SIP server, thereby ensuring a normal connection of an SIP call.

The method for reporting status of an SIP terminal according to an embodiment of the present invention employs the following technical solution.

A method for reporting status of an SIP terminal includes the following steps.

It is detected whether the status of the SIP terminal changes.

Status reporting information is generated when the status of the SIP terminal changes.

Current status of the SIP terminal is sent to an SIP server in the form of the status reporting information.

An SIP terminal capable of initiatively reporting its own status information to the SIP server is also provided in an embodiment of the present invention.

The SIP terminal according to the embodiment of the present invention employs the following technical solution.

An SIP terminal includes a detecting unit, an information generating unit, and a transceiver unit.

The detecting unit is adapted to detect whether status of the SIP terminal changes.

The information generating unit is adapted to generate status reporting information when the status of the SIP terminal changes.

The transceiver unit is adapted to send current status of the SIP terminal to an SIP server in the form of the status reporting information.

On the other hand, embodiments of the present invention provide a method for processing reported status of an SIP terminal and an SIP server so as to accurately provide the SIP terminal with a call connection.

The method of processing reported status of an SIP terminal according to an embodiment of the present invention includes the following steps.

A status reporting information reported by the SIP terminal is received.

The status of the SIP terminal is updated according to the status reporting information.

The SIP server according to an embodiment of the present invention includes a receiving unit and a status updating unit.

The receiving unit is adapted to receive status reporting information reported by the SIP terminal.

The status updating unit is adapted to update status of the SIP terminal according to the status reporting information.

Further, an embodiment of the present invention provides a system for reporting status of an SIP terminal so as to accurately provide the SIP terminal with a call connection.

The system for reporting status of an SIP terminal according to an embodiment of the present invention employs the following technical solutions.

A system for reporting status of an SIP terminal includes an SIP server and an SIP terminal.

The SIP terminal is adapted to generate and send status reporting information of its own status change to the SIP server.

The SIP server is adapted to update a status record of the SIP terminal according to the status reporting information, and send a status reporting response message to the SIP terminal.

In the embodiment of the present invention, the SIP terminal is capable of generating the status reporting information according to a received status change signal, and sending its own status information to the SIP server. Therefore, the SIP server may accurately obtain the current status of the SIP terminal, and provide the SIP terminal with a call connection service.

### BRIEF DESCRIPTION OF THE DRAWINGS

FIG. 1 is a schematic view of a system of reporting status of an SIP terminal according to a first embodiment of the present invention;

FIG. 2 is a flow chart of a method for reporting status of an SIP terminal according to a second embodiment of the present invention;

FIG. 3 is a flow chart of developing an immediate hotline service by using a method for reporting status of an SIP terminal according to a third embodiment of the present invention;

FIG. 4 is a flow chart of developing a call forwarding service by using a method for reporting status of an SIP terminal according to a fourth embodiment of the present invention;

FIG.5 is a structural view of an SIP terminal according to a fifth embodiment of the present invention;

FIG. 6 is a schematic view of an information generating unit in the SIP terminal according to the fifth embodiment of the present invention;

FIG. 7 is a flow chart of a method for processing reported status of an SIP terminal according to a sixth embodiment of the present invention; and

FIG. 8 is a structural view of an SIP server according to a seventh embodiment of the present invention.

### DETAILED DESCRIPTION

In order to solve the problem in the conventional art that, before the SIP terminal establishes a call, the SIP server may not accurately obtain the status information of the SIP terminal, thereby making the SIP server unable to accurately provide the SIP terminal with a connection, an embodiment of the present invention provides a system for reporting status of an SIP terminal. In the system, the SIP terminal initiatively reports its own status information to the SIP server. The embodiments of the present invention are further illustrated in detail below with the accompanying drawings. It should be understood that, the detailed description of the implementation herein is for illustration only, instead of limiting the present invention.

### [Embodiment 1]

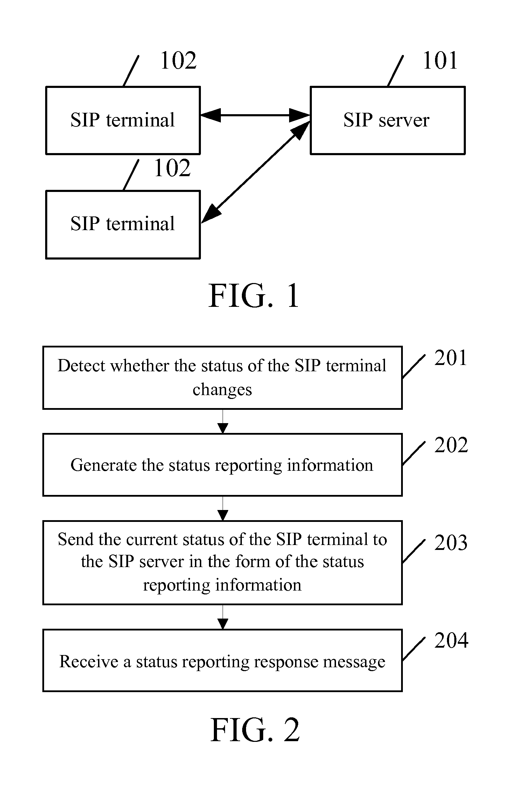

Referring to FIG. 1, a system for reporting status of an SIP terminal according to a first embodiment of the present invention includes an SIP server 101 and an SIP terminal 102. The SIP terminal 102 is adapted to generate and send status reporting information of its own status change to the SIP server 101. The SIP server 101 is adapted to update a status record of the SIP terminal 102 according to the status reporting information, and send a status reporting response message to the SIP terminal 102.

The status of the SIP terminal includes, for example, offhook, onhook, flashhook, and call forwarding (FWD) status. The implementation of the system according to the embodiment of the present invention is described below with FIG. 2.

### [Embodiment 2]

Referring to FIG. 2, a method for reporting status of an SIP terminal according to a second embodiment of the present invention includes the following steps.

Step 201: It is detected whether the status of the SIP terminal changes.

In this step, the SIP terminal continuously detects the operation of the user on the SIP terminal to detect whether the status of the SIP terminal changes. For example, if it is detected by the SIP terminal that the user is offhook, a status change signal obtained by the SIP terminal is an offhook signal, and the status thereof after change is an offhook status, and if it is detected by the SIP terminal that the user is onhook, a status change signal obtained by the SIP terminal is an onhook signal, and the status thereof after change is onhook status. The process of the SIP terminal detecting other status changes is similar.

Step 202: Status reporting information is generated when the status of the SIP terminal changes.

In the embodiment of the present invention, a certain event bearer message body in an INFO message in the SIP is extended to bear the status information of the SIP terminal. Here, the event bearer message body is supplementary service call control (SSCC).

In a specific application, at first, it is required that the current status of the SIP terminal is converted into a corresponding SIP event according to the status change signal received by the SIP terminal. The SIP events respectively corresponding to the offhook status, the onhook status, the flashhook status, and the FWD status are an offhook event, an onhook event, a flashhook event, and an FWD event. Then, the event bearer message body in the INFO message is adapted to bear the SIP event to obtain the status reporting message. In this embodiment, only several application forms of the embodiment of the present invention are listed, and other status changes of the SIP terminal may also be reported in the manner of the embodiment of the present invention.

In view of the above process, the SIP event may be defined in the following manner by extending the INFO message:

```
           Event=" event= ""offhook" | "onhook" | "flashhook" | token.
```

For example, to indicate a flashhook event, the INFO message of the status reporting message is expressed as follows:

```
           Content-Type: application/sscc
           Content-Length:
 
 
           Event= flashhook
```

In the above, Content-Type represents the type of the event, and in this embodiment, this byte is filled by application/sscc; Content-Length represents the length of the message body, and this byte is filled according to the length of the specific message body; and Event represents the name of the event.

It should be noted that, in the embodiment of the present invention, only a part related to the event bearer message body of the content of the INFO message is listed, and the other part of the INFO message conforms to the SIP.

Step 203: After the status reporting information is generated in Step 202, current status of the SIP terminal is sent to an SIP server in the form of the status reporting information.

After the SIP server receives the status reporting message, the method of the embodiment of the present invention further includes the following step.

Step 204: The SIP server updates and stores the current status of the SIP terminal according to the status reporting information and sends a status reporting response message to the SIP terminal, and the SIP terminal receives the status reporting response message.

A variety of services are realized through the method according to the embodiment of the present invention, such as immediate hotline service, delay hotline service, registering service on busy, FWD service, and IP conference service. The immediate hotline service and the FWD service are respectively taken as an example below to illustrate the implementation of the method according to the embodiment of the present invention.

### [Embodiment 3]

An immediate hotline service is realized by the method of the embodiment of the present invention.

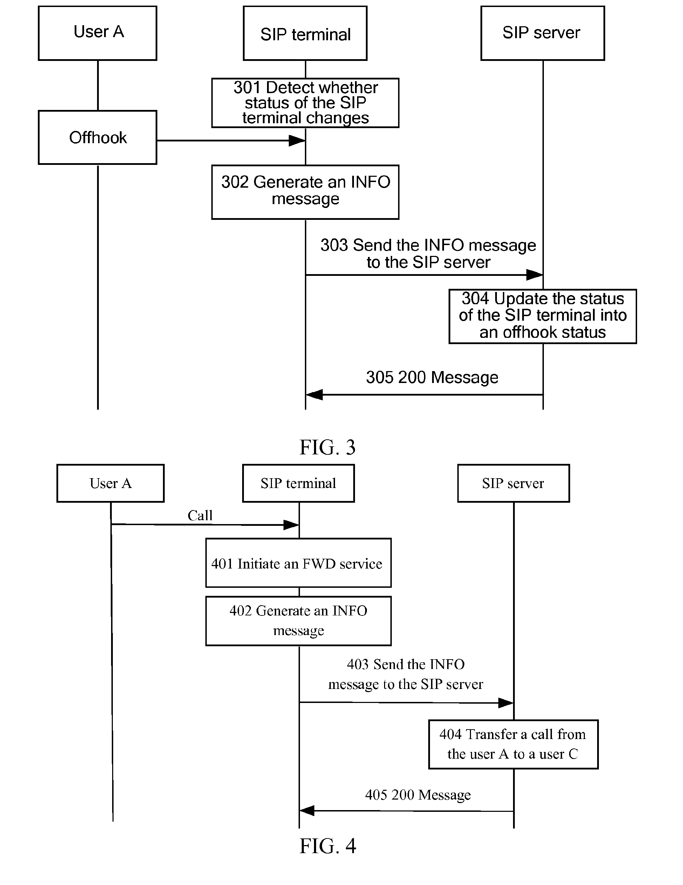

It is assumed that a user A of the SIP terminal registers an immediate hotline service on the SIP server, and a destination number called by the user after offhook is required to be 01062120000. As shown in FIG. 3, the specific process is as follows.

Step 301: Tt is detected whether status of the SIP terminal changes.

Step 302: After the user A is offhook, an INFO message is generated accordingly when it is detected that the status of the SIP terminal changes. The format of the INFO message is as follows:

```
        Content-Type: application/sscc
        Content-Length:
 
 
        Event=offhook
```

In this embodiment, only a part of the content of the INFO message is listed, the part of the content of the INFO message is related to the event bearer message body, and the other part of the INFO message conforms to the SIP.

Step 303: The SIP terminal sends the INFO message to the SIP server.

Step 304: On receiving the INFO message, the SIP server updates the status of the SIP terminal into the offhook status, detects that the user A registers the immediate hotline service, and establishes a call session of the user A with the destination number.

Step 305: The SIP server sends the status reporting message 200 to the SIP terminal.

### [Embodiment 4]

An FWD service is realized by the method of the embodiment of the present invention.

As shown in FIG. 4, it is assumed that a user B of the SIP terminal registers an FWD service on the SIP server, i.e., when the user A is calling the user B or the user A is in session with the user B, the user B may call a user C by pressing an FWD key on the SIP terminal thereof, and the number of the user C is 01062120000.

Step 401: When the user A is calling the user B, the user B discovers that the caller is the user A, and thus initiates the FWD service to transfer the call from the user A to the user C during the ringing of the user B, or initiates the FWD service when the user A is in session with the user B, operates the FWD key on the SIP terminal thereof, and dials the number 01062120000 of the user C so as to transfer the call from the user A to the user C.

Step 402: When it is detected that the status of the user B changes, the SIP terminal generates an INFO message according to the status that the user B initiates the FWD service, and the format of the INFO message is as follows:

```
           Content-Type: application/sscc
           Content-Length:
 
 
           Event=FWD
           Digit=01062120000
```

In the above, Digit represents the number of the user C.

In addition, the status that the user B initiates the FWD service may also be reported to the SIP server through two INFO messages. The following manner may be adopted, in which one INFO message reports the FWD event, and the other INFO message reports the number of the user C.

```
           Content-Type: application/sscc
           Content-Length:
 
 
           Event=FWD
           Content-Type: application/sscc
           Content-Length:
           Digit=01062120000
```

Step 403: The INFO message is sent to the SIP server, and the number of the user C is carried in the INFO message.

Step 404: The SIP server transfers the call from the user A to the user C according to the INFO message, and establishes a call of the user A with the user C.

Step 405: The SIP server sends a status reporting response message 200 to the user A.

Similar to the implementation of the fourth embodiment, services such as a three-party conference may also be realized. It should be noted that, only the flows of realizing an immediate hotline service and an FWD service through the method of the present invention are described herein, and the implementation of other services is similar to that of the above two types of services.

Furthermore, an SIP terminal is provided in a fifth embodiment of the present invention.

### [Embodiment 5]

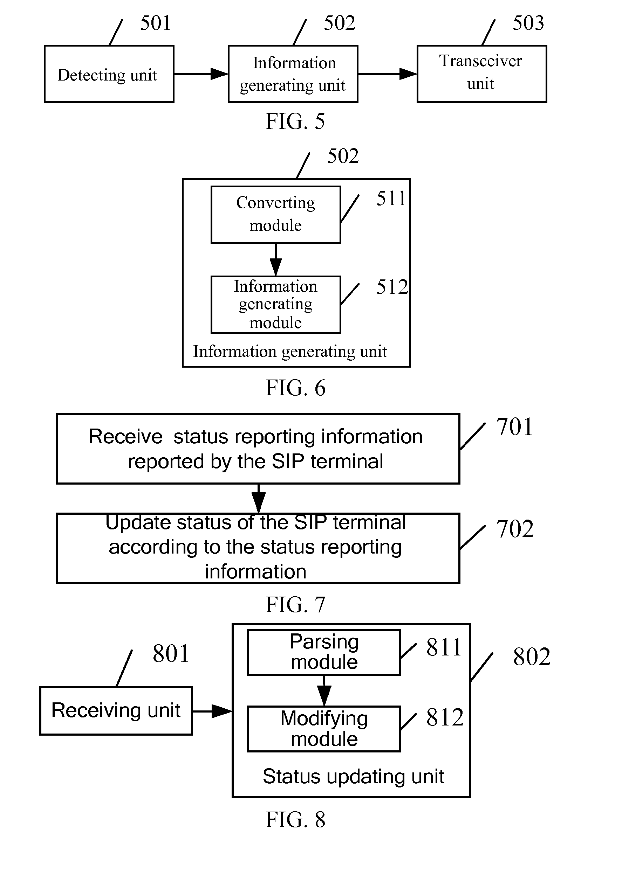

Referring to FIG. 5, the SIP terminal includes a detecting unit 501, an information generating unit 502, and a transceiver unit 503. The detecting unit 501 is adapted to detect whether status of the SIP terminal changes. The information generating unit 502 is adapted to generate status reporting information when the status of the SIP terminal changes. The transceiver unit 503 is adapted to send current status of the SIP terminal to an SIP server in the form of the status reporting information.

Referring to FIG. 6, the information generating unit 502 includes a converting module 511 and an information generating module 512. The converting module 511 is adapted to convert the current status of the SIP terminal into a corresponding SIP event. The information generating module 512 is adapted to utilize an event carrier message body in an INFO message to carry the SIP event so as to obtain a status reporting message.

Further, in order to ensure the success of the status updating of the SIP terminal, the transceiver unit 503 is further adapted to receive a status reporting response message sent by the SIP server.

Corresponding to the method of reporting status of an SIP terminal provided in the second to the fourth embodiment, a method of processing reported status of an SIP terminal is further provided in a sixth embodiment of the present invention.

### [Embodiment 6]

As shown in FIG. 7, the method of processing reported status of an SIP terminal according to the sixth embodiment includes the following steps.

Step 701: The SIP server receives status reporting information reported by the SIP terminal.

The format of the status reporting information is the same as that in the second to the fifth embodiment, and the details will not be described herein again.

Step 702: The SIP server updates status of the SIP terminal according to the status reporting information. In particular, the SIP server parses the status reporting message, obtains status information of the SIP terminal, and modifies current status of the SIP terminal into status corresponding to the status information.

In this manner, the SIP server accurately acquires the current status of the SIP terminal, and provides the SIP terminal with a call connection service.

In addition, corresponding to the sixth embodiment of the present invention, an SIP server is further provided in a seventh embodiment of the present invention.

### [Embodiment 7]

Referring to FIG. 8, the SIP server of this embodiment includes a receiving unit 801 and a status updating unit 802. The receiving unit 801 is adapted to receive status reporting information reported by the SIP terminal. The status updating unit 802 is adapted to update status of the SIP terminal according to the status reporting information.

Further, the status updating unit 802 includes a parsing module 811 and a modifying module 812. The parsing module 811 is adapted to parse the status reporting message to obtain status information of the SIP terminal. The modifying module 812 is adapted to modify current status of the SIP terminal into status corresponding to the status information.

In view of the above, the SIP terminal is capable of generating the status reporting information according to a received status change signal, and sending its own status information to the SIP server. Therefore, the SIP server may accurately obtain the current status of the SIP terminal, and provide the SIP terminal with a call connection service. In addition, the support to immediate hotline, relay hotline, and other services may be realized by using the embodiments of the present invention.

In the embodiments of the present invention, the SIP terminal may be equipment such as an SIP software terminal, SIP phone, or SIP IAD.

Those of ordinary skill in the art should understand that all or a part of the steps of the method according to the embodiments of the present invention may be implemented by relevant hardware under the instruction of a program. The program may be stored in a computer readable storage medium, such as a ROM/RAM, a magnetic disk, or an optical disk.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the spirit and scope of the present invention and covered in the claims of the present invention.

## Claims

1. A method for reporting status of a session initiation protocol, SIP, terminal, comprising:
detecting whether the status of the SIP terminal changes;
generating status reporting information when the status of the SIP terminal changes; and
sending current status of the SIP terminal to an SIP server in the form of the status reporting information.

2. The method for reporting status of an SIP terminal according to claim 1, wherein the generating the status reporting information comprises:
converting the current status of the SIP terminal into a corresponding SIP event; and
bearing the SIP event by utilizing an event bearer message body in a reporting message to obtain the status reporting information.

3. The method for reporting status of an SIP terminal according to claim 2, wherein the event bearer message body is a supplementary call service control message body.

4. The method for reporting status of an SIP terminal according to any one of claims 1 to 3, further comprising:
receiving a status reporting response message sent by the SIP server.

5. A method for processing reported status of a session initiation protocol ,SIP, terminal, comprising:
receiving status reporting information reported by the SIP terminal; and
updating the status of the SIP terminal according to the status reporting information.

6. The method for processing reported status of an SIP terminal according to claim 5, wherein the updating the status of the SIP terminal according to the status reporting information comprises:
parsing the status reporting information to obtain status information of the SIP terminal; and
modifying current status of the SIP terminal into status corresponding to the obtained status information.

7. A session initiation protocol, SIP, terminal, comprising:
a detecting unit, adapted to detect whether status of the SIP terminal changes;
an information generating unit, adapted to generate status reporting information when the status of the SIP terminal changes; and
a transceiver unit, adapted to send current status of the SIP terminal to an SIP server in the form of the status reporting information.

8. The SIP terminal according to claim 7, wherein the information generating unit comprises:
a converting module, adapted to convert the current status of the SIP terminal into a corresponding SIP event; and
an information generating module, adapted to bear the SIP event by utilizing an event bearer message body in a reporting message to obtain a status reporting message.

9. The SIP terminal according to claim 7 or 8, wherein
the transceiver unit is further adapted to receive a status reporting response message sent by the SIP server.

10. A session initiation protocol, SIP, server, comprising:
a receiving unit, adapted to receive status reporting information reported by the SIP terminal; and
a status updating unit, adapted to update status of the SIP terminal according to the status reporting information.

11. The SIP server according to claim 10, wherein the status updating unit comprises:
a parsing module, adapted to parse the status reporting message to obtain status information of the SIP terminal; and
a modifying module, adapted to modify current status of the SIP terminal into status corresponding to the status information obtained by the parsing module.

12. A system for reporting status of a session initiation protocol, SIP, terminal, comprising an SIP server and an SIP terminal, wherein
the SIP terminal is adapted to generate status reporting information of status change of the SIP terminal and send the status reporting information of the status change of the SIP terminal to the SIP server; and
the SIP server is adapted to update a status record of the SIP terminal according to the status reporting information, and send a status reporting response message to the SIP terminal.

13. The system for reporting status of an SIP terminal according to claim 12, wherein the SIP terminal comprises:
a detecting unit, adapted to detect whether the status of the SIP terminal changes;
an information generating unit, adapted to generate the status reporting information when the status of the SIP terminal changes; and
a transceiver unit, adapted to send current status of the SIP terminal to the SIP server in the form of the status reporting information.

14. The system for reporting status of an SIP terminal according to claim 12, wherein the SIP server comprises:
a receiving unit, adapted to receive the status reporting information reported by the SIP terminal; and
a status updating unit, adapted to update the status of the SIP terminal according to the status reporting information.
